Europäisches Patentamt

European Patent Office

Office européen des brevets

(19)

(11) **EP 0 694 179 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(21) Anmeldenummer: **94912455.6**

(22) Anmeldetag: **13.04.1994**

(51) Int Cl.⁶: **G02B 27/22**

(86) Internationale Anmeldenummer:
**PCT/DE94/00415**

(87) Internationale Veröffentlichungsnummer:
**WO 94/24601 (27.10.1994 Gazette 1994/24)**

(54) **Autostereoskopische Wiedergabeeinrichtung mit monoskopischen Wiedergabebereichen ohne pseudostereoskopische Effekte**

Autostereoscopic reproduction device having monoscopic viewing zones without pseudo-stereoscopic effects

Dispositif de reproduction autostéréoscopique avec des zones de reproduction monoscopique sans effets pseudostéréoscopiques

(84) Benannte Vertragsstaaten:
**CH DE DK ES FR GB LI NL**

(30) Priorität: **14.04.1993 DE 4312918**

(43) Veröffentlichungstag der Anmeldung:
**31.01.1996 Patentblatt 1996/05**

(73) Patentinhaber: **Heinrich-Hertz-Institut für Nachrichtentechnik Berlin GmbH**
**10587 Berlin (DE)**

(72) Erfinder: **BÖRNER, Reinhard**
**D-10719 Berlin (DE)**

(74) Vertreter: **Wolff, Konrad et al**
**Heinrich-Hertz-Institut für Nachrichtentechnik Berlin GmbH,**
**Gemeinsamer Patentservice,**
**Hausvogteiplatz 5-7**
**10117 Berlin (DE)**

(56) Entgegenhaltungen:
**EP-A- 0 354 851        EP-A- 0 404 289**

**Beschreibung**

Die Erfindung bezieht sich auf eine Wiedergabeeinrichtung zum Erzeugen stereoskopischer Wirkungen in mindestens einer örtlich begrenzten Zone ihres vor ihr befindlichen Beobachtungsbereichs, mit :

einem flachen Bildschirm, auf dem sich Stereobilder als vertikal zerlegte Bildstreifen paarweise ineinander gerastert darstellen lassen, und
einer Lentikularplatte, die dem flachen Bildschirm vorgelagert ist und senkrecht verlaufende, jeweils einem auf dem flachen Bildschirm darzustellenden Bildstreifenpaar zugeordnete Zylinderlinsen trägt.

Eine derartige Wiedergabeeinrichtung kann bereits einer größeren Anzahl von Veröffentlichungen entnommen werden, weil sie dazu geeignet ist, Abbildungen zu erzeugen, die autostereoskopisch, das heißt, dreidimensional ohne zusätzliche optische Hilfsmittel wahrnehmbar sind.

Den Stand der Technik, von dem die Erfindung ausgeht, bildet die aus der DE-A 39 21 061 bekannte Wiedergabeeinrichtung, bei der der dreidimensionale Abbildungscharakter der erzeugten Bilder durch eine streifenweise Ineinander-Rasterung zweier Kamerasignale, die im natürlichen Augenabstand vom abzubildenden Objekt aufgezeichnet werden, auf einem flachen Bildschirm und durch eine getrennte Zuführung der Bildstreifen über eine vorgelagerte Lentikularplatte auf das linke bzw. rechte Auge des Betrachters erreicht wird. Zwischen dem Bildschirm und der Lentikularplatte befindet sich ein Luftspalt. Allgemein können bei einer solchen Wiedergabeeinrichtung Maßnahmen zur Qualitätsverbesserung der örtlich begrenzten Raumbildwiedergabe vorgesehen sein. Hierzu zählen Korrekturmaßnahmen an der Lentikularplatte selbst, wie eine Veränderung der Linsenpitchbreite oder Plattendicke. Aus der EP-A 0 493 863 ist für eine Wiedergabeeinrichtung mit einer störlichtmindernden Oberflächenreliefstruktur bekannt, zur Verbesserung der Bildqualität noch zusätzlich zu den genannten Korrekturmaßnahmen die Radien der einzelnen Zylinderlinsen zu verändern.

Aus der oben genannten DE-A 39 21 061 ist weiterhin bekannt, eine optische Bildkorrektur durch Veränderung der relativen, planparallelen Lage der Lentikularplatte gegenüber dem Bildschirm horizontal und frontal vorzunehmen. Zwischen Lentikularplatte und Bildschirm ist dafür ein veränderbarer Luftspalt vorgesehen. Die Lagekorrektur erfolgt abhängig von der Augenposition eines einzelnen Betrachters, so daß eine Einstellung des Bildinhalts auf ihn möglich ist. Dieser muß dann seinen Kopf nicht mehr relativ starr halten. Eine derartige Bildanpassung kann manuell, per Fernsteuerung oder interaktiv über eine entsprechende Detektion der Betrachteraugenposition vorgenommen werden, um eine weitere Komfortverbesserung zu erreichen (sogenanntes "Head-Tracking-Verfahren").

Zur selben Problematik ist aus der EP-A 0 354 851 ein System bekannt, daß vertikal zerlegte Bildstreifen, die auf einem aktiven Bildschirm paarweise ineinandergerastert sind, elektronisch gesteuert um jeweils eine Pixelspalte versetzt, wenn der Betrachter eine Zone verläßt, in der die bisherige stereoskopische Wirkung von ihm wahrgenommen wurde. Auf diese Weise nimmt er in seiner neuen Position auch wieder dieselben Bildinhalte wie zuvor wahr. Diese Lösung, dem Betrachter einen großen Bewegungsspielraum vor der Wiedergabeeinrichtung zu bieten, tritt also an die Stelle der mechanisch-optischen Maßnahmen gemäß der zuvor genannten DE-A 39 21 061.

Die genannten Aspekte sind auch im Rahmen allgemeiner Ausführungen zum technologischen Hintergrund für derartige Wiedergabeeinrichtungen einer Reihe von anderen Druckschriften zu entnehmen. Genannt seien an dieser Stelle die Aufsätze "Dreidimensional im Großformat" (W.Hascher, Funkschau 15/1992, Seiten 22 bis 26); "Ein Display für autostereoskopisches 3D-Fernsehen" (H.Isono, M.Yasuda, NHK Lab.Note No.398, 12/91, zusammengestellt von Dr.G.Pollakowski, abgedruckt in Fernseh- und Kino-Technik 5/1992, 46.Jahrg., Seiten 343 bis 345); "Interactive stereoscopic computer graphic display systems" (N.Storey, J.F.Craine, Conference papers Vol.326, Interact '84, First IFIP-Conference on "Human-Computer-Interaction", Sept. 4 bis 7, 1984, London, Seiten 382 bis 387) und "Three dimensional media technology" (Proceedings of the 1989 International Conference, Hal Thwaites, published by the 3Dmt Research and Information Center, Montreal, Quebec, Canada).

Zur Erzielung einer möglichst naturgetreuen Raumtiefenwirkung wird bei den Wiedergabeeinrichtungen nach dem genannten Stand der Technik eine hohe horizontale Bildauflösung durch eine möglichst feine linsenparallele Ineinander-Rasterung der beiden Teilbilder einer Stereoaufnahme angestrebt. (Aus dem genannten Aufsatz "Dreidimensional im Großformat"; W.Hascher, Funkschau 15/1992, Seiten 22 bis 26; ist für eine Wiedergabeeinrichtung der beschriebenen Art auch bekannt, für 3D-Darstellungen die Signale von vier Farbkameras einzusetzen, wobei aber pro Zuschauer wiederum nur zwei Signale verwendet werden. Deshalb sollen auch solche Aufnahmeverfahren mit dem Begriff "Stereoaufnahme" erfaßt sein.) Aufgrund der Abbildungsgeometrie der für eine hohe Tiefenauflösung einzusetzenden Zylinderlinsen entstehen im gesamten Beobachtungsbereich relativ schmale Zonen mit den Informationen entweder für das linke oder rechte Auge des Betrachters. Die schmalen Zonen liegen alternierend nebeneinander, und der Betrachter muß seine Kopfposition so wählen, daß jedes seiner Augen der richtigen schmalen Zone zugeordnet ist. Nur dann kann er die Abbildungen autostereoskopisch wahrnehmen. Verändert der Betrachter seine Position derart, daß die Bildinformationen in falscher Zuordnung seinen Augen zugeführt werden, nimmt er eine Tiefenvertauschung wahr, er sieht pseudoskopisch. Beim Übergang in die Zonen pseudoskopischen Sehens treten plötzliche Tiefenversprünge auf. Die Pseudoskopiezonen wirken sich für den Betrachter jedoch störend aus. Um ständig korrekte Bildinformationen zu erhalten, muß der Betrachter seinen Kopf in einer sehr eng begrenzten Beobachtungszone halten. In den Bildrandbereichen entstehen Doppelbilder durch internes und externes Bildübersprechen.

Bei einer Wiedergabeeinrichtung der erfindungsgemäßen Gattung soll vermieden werden, daß über den gesamten Beobachtungsbereich verteilt eine Vielzahl von Zonen mit mehr oder weniger gut geeigneten sowie insbesondere wegen Pseudoskopie ungeeigneten Betrachterpositionen in Erscheinung tritt.

Derartige Probleme konnen nach der Lehre der Erfindung dadurch gelöst werden, daß die Lentikularplatte mit ihren Zylinderlinsen bezüglich ihrer Parameter Pitchbreite der Zylinderlinsen sowie Dicke und Brechungsindex der Lentikularplatte einen Aufbau aufweist, aufgrund dessen zwei zumindest direkt benachbarte Monozonen im Beobachtungsbereich mit jeweils großer Zonenbreite und eine zentrale Stereozone im Übergangsbereich zwischen bzw. innerhalb der Monozonen entstehen, indem diese Parameter, bezogen auf eine vorzugebende Entfernung der Lentikularplatte zu einer zentralen Betrachtungsebene, entsprechend den sich aus der strahlengeometrischen Beziehung

$$Z = \frac{E}{\sqrt{\frac{1}{n^2}\left(\left(\frac{T}{P/2}\right)^2 + 1\right) - 1}}$$

ergebenden Verhältnissen dimensioniert sind.

Dabei sind bezeichnet mit

Z :    Zonenbreite einer Monozone
E :    Entfernung zwischen Lentikularplatte und zentraler Betrachtungsebene
n :    Brechungsindex der Lentikularplatte
T :    Dicke der Lentikularplatte
P :    Pitchbreite der Zylinderlinsen.

Dieser Aufbau der erfindungsgemäßen Wiedergabeeinrichtung ermöglicht, daß die von einer Stereoaufnahme erzeugten Abbildungen in der zentralen Stereozone des Beobachtungsbereichs für wenigstens einen zentralen Betrachter autosteroskopisch und die von derartigen Stereoaufnahmen wie auch von identischen Teilbildern einer Monoaufnahme erzeugten Abbildungen in den beiden, der zentralen Stereozone seitlich zumindest direkt benachbarten großen Monozonen des Beobachtungsbereichs für jeweils mehrere Betrachter monoskopisch wahrnehmbar sind.

Bei der Wiedergabeeinrichtung nach der Erfindung handelt es sich um eine stereo-mono-kompatible Einrichtung, die gleichzeitig sowohl einem zentralen Betrachter eine autosteroskopische als auch mehreren Betrachtern in seitlichen Positionen eine monoskopische Wahrnehmung ein und derselben Abbildung zuläßt. Hierzu ist der gesamte Beobachtungsbereich in zwei große Bereiche aufgeteilt, die die einzelnen Zonen bilden. Diese Bereiche sind große Monozonen, in denen auschließlich das linke oder rechte Signal der Stereobildaufnahme zur Bilderzeugung eingesetzt wird. Der Bereich des linken Bildsignals bildet eine von zwei großen Monozonen, in der aufgrund ihrer großen räumlichen Ausdehnung eine ganze Reihe von Betrachtern mit ihren beiden Augen die Abbildung monoskopisch wahrnehmen können. Entsprechend bildet der Bereich des rechten Bildsignals die andere große Monozone, in der auch mehrere Betrachter Platz haben, die ebenfalls monoskopisch sehen. Aufgrund des geringen Signalabstandes (Augenabstand) bei der Stereoaufnahme unterscheiden sich die Bildinhalte von linker und rechter großer seitlicher Zone nur gering. Die Betrachter erhalten alle nahezu, bei übereinstimmenden Teilbildern einer Monoaufnahme völlig identische Bildinformationen. Der Bildschirm der erfindungsgemäßen Wiedergabeeinrichtung ist damit im Gegensatz zu den üblichen zweikanaligen, stereoskopischen Bildschirmen für alle Betrachter auch als Monobildschirm einsetzbar.

Die zentrale Stereozone wird von einem Übergangsbereich zwischen bzw. innerhalb der beiden Monozonen gebildet. In ihr werden die Augen eines Betrachters gleichzeitig von beiden Monosignalen in der richtigen Zuordnung erreicht, das heißt, der Betrachter sieht autostereoskopisch. Dabei befindet sich das linke Auge des Betrachters immer in der linken Monozone und das rechte immer in der rechten. Daher entspricht die Breite der zentralen Stereozone ungefähr dem doppelten menschlichen Augenabstand. Dieser bestimmt in Verbindung mit der Lage der Betrachtungsebene auch die Tiefe der zentralen Stereozone. Insgesamt hat diese relativ geringe Ausmaße. Wandert der zentrale Betrachter mit beiden Augen in eine der beiden großen Monozonen, entsteht für ihn sofort eine monoskopische Darstellung der Abbildungen ohne pseudoskopische Störeffekte. Es gehen ihm in diesen Monozonen zwar die räumlichen Informationen verloren, für eine Orientierung kann das aber genügen. Von Bedeutung ist jedoch, daß dem Betrachter zu keinem Zeitpunkt Fehlinformationen zugeführt werde oder er den Blickkontakt zur Abbildung verliert, obwohl er nicht zu einer starren Kopfhaltung gezwungen wird. Bei einer Monoaufnahme mit identischen Teilbildern in beiden großen Monozonen wird auch die zentrale Stereozone kompatibel in eine Monozone umgewandelt bzw. in die beiden großen Monozonen integriert.

Vergleichbar ist der Effekt der Erfindung - definierte Autostereoskopiezone mit zwei seitlich anschließenden großen Monoskopiezonen - mit Aufbauten aus dem Stereophoniebereich. Auch hier ist das Ziel, durch entsprechende Maßnahmen in der Zweikanaltontechnik einen genau definierten Bereich für räumliches Hören zu schaffen, an den sich ohne störende Pseudostereophonieefekte direkt große ausgezeichnete Monophoniebereiche anschließen.

Bei den Wiedergabeeinrichtungen nach der Erfindung kann es sich um Einrichtungen mit einem aktiven Bildschirm, im allgemeimen einem Direktsichtdisplay, oder mit einem passiven Bildschirm für eine Rückprojektion handeln. Der Bildschirm ist flach ausgebildet. Die Bildschirmgröße kann sich bis in den Großbildbereich erstrecken, das heißt, die Anwendungsmöglichkeiten liegen sowohl auf dem Gebiet der Tischgeräte (Workstation, Bildtelefon) als auch auf dem Gebiet der Großbildprojektion. Die Abbildungserzeugung umfaßt stehende wie bewegte, ein- wie mehrfarbige Bilder in Stereoaufnahme (speziell auch 3D-Videobilder, computer-generierte Bilder oder Grafiken). Auch Monoabbildungen oder -programme durch Signalgleichschaltungen auf beiden Kanälen sind möglich.

Aufgrund der räumlichen Ausdehnung der zentralen Zone wird sich in dieser in der Regel nur ein einzelner zentraler Betrachter aufhalten. Möglich ist nur noch die Positionierung von zwei oder mehr zentralen Betrachtern übereinander (beispielsweise sitzend und stehend). Bei dem zentralen Betrachter kann es sich um einen aktiv arbeitenden Menschen handeln, für dessen Arbeit in erster Linie die dreidimensionalen Informationen ohne Pseudoskopieeffekte wichtig sind. In den großen seitlichen Zonen haben dagegen eine Reihe von Beobachtern Platz, auch räumlich übereinander. Sie erhalten alle nahezu identische monoskopische, korrekte Informationen. Das Anwendungsgebiet der erfindungsgemäßen Wiedergabeeinrichtung ist verstärkt deshalb dort zu sehen, wo eine aktive Person von mehreren passiven Personen umgeben ist. Möglich sind Anwendungen bei medizinischen Operationen oder technischen Manipulationen. Denkbar sind aber auch reine Objektdarstellungen, bei denen ein passiver Betrachter die drei Zonen nacheinander durchwandern kann und dabei unterschiedliche Eindrücke vom ausgestellten Objekt gewinnt, ohne den Blickkontakt dazu zu verlieren.

Die Größe der Beobachtungszonen ist unter anderem abhängig von der Abbildungsgeometrie der eingesetzten Zylinderlinsen. Deshalb ist es nach einer Ausgestaltung der erfindungsgemäßen Wiedergabeeinrichtung besonders vorteilhaft, wenn die Zylinderlinsen aufgrung der Wahl eines oberen Grenzwerts für deren Pitchbreite in bezug auf eine geringe Dicke der Lentikularplatte einen großen Öffnungswinkel aufweisen, so daß der gesamte Beobachtungsbereich in zwei gleich große Bereiche, die Monozonen, aufgeteilt ist.

Die großen Monozonen haben den Vorteil, daß der gesamte Beobachtungsbereich ausgenutzt wird. Ein großer Öffnungswinkel erzeugt bekanntermaßen einen räumlich großen Abbildungsbereich. Dabei ist jedoch dessen Begrenzung durch die endliche Zerstreuungsbreite der abzubildenden Bildstreifenpaare zu beachten, um unscharfe Abbildungen zu vermeiden. Außerdem sollte ein Einblickswinkel von ungefähr 10' auf die Zylinderlinse (minimaler Sehwinkel), unter dem diese für das menschliche Auge unsichtbar bleibt, bei der Breitenbemessung der Zylinderlinse nicht überschritten werden. Sind die Pitchbreite und die Dicke der Lentikularplatte über die gesamte Bildschirmbreite konstant, ist auch der Öffnungs-winkel konstant. Für eine erste Vorstellung bezüglich der Relation zwischen den Ausmaßen der Pitchbreite der Zylinderlinsen und Dicke der Lentikularplatte ist zu bemerken, daß diese bevorzugt im Bereich gleicher Größenordnung liegen sollte. Beim eingangs genannten Stand der Technik ist die die Dicke zumeist eine Größenordnung größer als die Pitchbreite.

Die Wahl des Grenzwertes für das Verhältnis von Pitchbreite zu Dicke zur Erzielung eines möglichst großen Öffnungswinkels und damit möglichst großer Monozonen ist jedoch nicht nur von der endlichen Zerstreuungsbreite der Bildstreifenpaare und der Sehwinkelbedingung abhängig. Insbesondere ist der Effekt der Totalreflexion zu beachten, der eine Bildwahrnehmung verhindert. Totalreflexion liegt dann vor, wenn ein auf die innere Oberfläche einer Zylinderlinse auftreffender Lichtstrahl diese nicht verläßt, sondern zurückgeworfen wird. Im Grenzfall der Totalreflexion läuft der gerade noch austretende äußerste Seitenstrahl parallel zur Oberfläche der Lentikularplatte. Der dabei auftretende Grenzwinkel für Totalreflexion ist eine Materialkonstante. Innerhalb des Grenzwinkels liegende Lichtstrahlen werden zur Pixelebene zurückgeworfen. Für eine Bestimmung der Totalreflexion ist die Kenntnis der Materialeigenschaften der Lentikularplatte und ihrer geometrischen Beziehungen zum Betrachter erforderlich. Es ist daher gemäß einer weiteren Ausgestaltung der Wiedergabeeinrichtung nach der Erfindung vorteilhaft, wenn die Parameter Pitchbreite und Dicke in Abhängigkeit von weiteren Parametern der Wiedergabeeinrichtung - Bildschirmbreite, Betrachterentfernung, Brechungsindex und Krümmungsradius der Zylinderlinsen - hinsichtlich ihrer Grenzwerte unter Vermeidung innerer Reflexe durch Totalreflexion an den Krümmungsflächen der Zylinderlinsen dimensioniert sind. Diese Dimensionierungsvorschrift stellt eine wichtige Voraussetzung auch für weiterführende Ausgestaltungen der Erfindung dar.

Die Ermittlung der einzelnen Parameterwerte zur Erzielung des optimalen Verhältnisses von Pitchbreite zu Plattendicke kann nur in deren komplexem Zusammenhang erfolgen. Die Berechnungsgleichungen und ihre Lösungen werden bevorzugt rechnerunterstützt iterativ ermittelt. Eine Annahme bezüglich der Voraussetzung zur Verhinderung der Totalreflexion vereinfacht den Rechenaufwand jedoch wesentlich. Deshalb ist es nach einer folgenden Ausgestaltung der Erfindungsidee von besonderer Bedeutung, wenn alle Zylinderlinsen nach Maßgabe der bezüglich der Totalreflexion dimensionierten äußersten Zylinderlinsen am linken bzw. rechten Rand der Lentikularplatte ausgelegt sind.

Diese Maßnahme ermöglicht eine Berechnung aller Parameter auf der sicheren Seite. Die für den Betrachter ungünstigsten Einblickswinkel haben die Randbereiche des Bildschirms, weil er hier besonders schräg in die Linse einblickt. Kann jetzt durch entsprechende Wahl der Parameter sichergestellt werden, daß auch die äußersten Strahlen von den Bildschirmrändern den Betrachter ohne Eintritt von Totalreflexion erreichen, tun dies alle anderen Strahlen, die weiter zur Bildschirmmitte liegen, mit Sicherheit auch, und für jeden Betrachter ist eine qualitativ hochwertige Abbildungswahrnehmung garantiert. Zur Vorgehensweise und zur Berechnung selbst sind weitere Erläuterungen und Ausführungen dem speziellen Beschreibungsteil zu entnehmen.

Bisher wurde auf die Bestimmung der für die Monozonengröße wesentlichen Parameter Pitchbreite der Zylinderlinse und Dicke der Lentikularplatte in Abhängigkeit von den anderen Parametern eingegangen. Da sich die Parameter zumindest bereichsweise in einer kontinuierlichen Abhängigkeit voneinander befinden, ist es nach einer weiteren Fortführung der erfindungsgemäßen Wiedergabeeinrichtung auch möglich, daß andere Parameter - Zonenbreite und Tiefe der großen Monozonen; Bildschirmbreite - in Abhängigkeit von den jeweils verbleibenden Parametern durch die Wahl ihrer Grenzwerte festlegbar sind. Damit kann jeweils nach den Erfordernissen eine optimale Anpassung der einzelnen Parameter innerhalb bestimmter Bereiche durchgeführt werden. Die Ermittlung der Werte erfolgt iterativ unter der Voraussetzung der Verhinderung von inneren Reflexen speziell in den Randbereichen.

Nach einer anderen Fortführung der erfindungsgemäßen Wiedergabeeinrichtung sind die Zylinderlinsen an ihrer Oberfläche asphärisch gekrümmt. Die Krümmung kann beispielsweise elliptisch ausgebilder sein. Durch diese Maßnahme wird eine hohe Abbildungsqualität der Linse erzielt. Im Betrachtungszentrum erfolgt eine saubere Kanaltrennung. Weiterhin ist es vorteilhaft, wenn erfindungsgemäß jede einzelne Zylinderlinse an ihren seitlichen Begrenzungen Reflexionsflächen aufweist, an denen einfallende Lichtstrahlen durch die Linsenmitte reflektiert werden. Eine Einstrahlung durch Nebenlinsen wird verhindert. Die Lichtausbeute pro Zylinderlinse ist dann maximal und führt zu lichtstarken Abbildungen. Durch schmale Einschlitzungen oder Einlagen an der Rückseite der Lentikularplatte zwischen den einzelnen Zylinderlinsen entlang ihrer Längsachsen ist eine derartige Lichtführung zu erreichen.

Den folgenden drei Unteransprüchen sind Ausgestaltungen der erfindungsgemäßen Wiedergabeinrichtung zu entnehmen, die eine Verbesserung der optischen Wiedergabequalität der erzeugten Abbildungen durch korrigierende Maßnahmen bezüglich der Pitchbreite und des Krümmungsradius der Zylinderlinsen, der Breite der Bildstreifenpaare sowie der Dicke der Lentikularplatte betreffen. Derartige Maßnahmen und ihre große Wirksamkeit sind aus dem genannten Stand der Technik bereits ausführlich bekannt. Zur Vermeidung von Wiederholungen soll an dieser Stelle nicht weiter darauf eingegangen werden.

Die Verwendung von relativ breiten Zylinderlinsen mit einem großen Öffnungswinkel zur Erzielung großer Abbildungsbereiche bedingt, daß auch die hinter den einzelnen Zylinderlinsen befindlichen Bildstreifenpaare relativ breit sind. Wird eine ähnliche Tiefe des Beobachtungsbereichs wie bei Bildschirmen mit einer Lentikularplatte mit schmalen Zylinderlinsen angestrebt, erhöht sich entsprechend die gesamte Bildschirmbreite. Je nach Anwendungsfall kann jedoch auch eine geringere Tiefe des Beobachtungsbereichs zugelassen sein, um beispielsweise einen vorhandenen Bildschirm einsetzen zu können. Je nach Art des Bildaufbaus können dabei verbreiterte Bildstreifen oder zusammengeschaltete, nebeneinanderliegende Pixelspalten verwendet werden. Besonders vorteilhaft ist es jedoch bei aktiven Bildschirmen entsprechend einer nächsten Ausgestaltung der Erfindung, wenn den breiten Zylinderlinsen jeweils ein Bildstreifenpaar zugeordnet ist, bei dem jeder einzelne Streifen mit einer einzigen Spalte aus relativ breiten Pixeln besteht. Es treten dann keine Bildstörungen bei seitlicher Bewegung der Betrachter in den Monozonen auf, da keine Trennlinien zwischen den einzelnen Pixelspalten wie bei der Zusammenschaltung mehrerer Pixelspalten für einen breiten Bildstreifen vorhanden sind. Die Ansteuerung der breiten Pixelspalten ist einfach. In der Größenordnung der Abmessung kann ein breites Pixel beispielsweise vier normal breite Pixel überdecken.

Nach einer anderen Ausgestaltung der Erfindung kann eine Einrichtung zur Nachführung der erzeugten Bildinhalte vorgesehen sein, die bei autostereoskopischer Bildbetrachtung durch einen Betrachter dessen Augen- und/oder Kopfposition laufend detektiert und den erzeugten Bildinhalt auf die Augenposition innerhalb der Stereozone einstellt. Ist bei einer derart ausgestalteten Wiedergabeeinrichtung zwischen dem Bildschirm und der Lentikularplatte ein Luftspalt vorgesehen, kann zur Erhaltung des Blickkontaktes die relative Lage von Bildschirm und Lentikularplatte zueinander in der Horizontalen und in der Tiefe verändert werden. Die Größe des Beobachtungsbereichs mit Nachführmöglichkeit der zentralen Zone ist dabei abhängig vom Steuerbereich der Lentikularplattenlage (Shiften der Lentikularplatte) vor dem Bildschirm (stationäres Flachbilddisplay). Bei Wiedergabeeinrichtungen mit einem großen Projektionsschirm für eine Rückprojektion kann zur Durchführung des Head-Trackings entweder die Steuerschicht oder das Objektiv seitlich verfahren, gegebenenfalls gezoomt werden. Der Projektor selbst sollte wegen der großen Verfahrwege stationär bleiben. Gerade, wenn die erfindungsgemäße Wiedergabeeinrichtung für Anwendungen eingesetzt wird, bei denen ein zentraler Betrachter aktiv handelt, beispielsweise bei einer mikrochirurgischen Operation, ist die Komfortverbesserung durch Head-Tracking für den Operateur von besonderer Bedeutung. Er braucht nicht die starre Kopfhaltung wie am Mikroskop einzunehmen. Die Lage des stereoskopischen Bereichs wird seiner Kopfposition angepaßt. Die Trennlinie zwischen den beiden Monobereichen wird automatisch auf seine Nasenlinie eingestellt, so daß er optimal autostereoskopisch sehen kann. Es ergibt sich, daß die Orte optimaler autosteroskopischer Wahrnehmung auf einem Bogen um die Bildschirmmitte herum angeordnet sind. Außerhalb des Nachführbereichs sieht der zentrale Betrachter störungsfrei monoskopisch. Die Beobachter in den großen Monozonen werden durch die Bildnachführung auf den zentralen Betrachter praktisch nicht gestört, da der Bildinhalt gleich bleibt, obwohl sich die Monozonen verschieben.

Im folgenden werden einige Figuren zur weiteren Veranschaulichung der erfindungsgemäßen Wiedergabeeinrichtung und davon besonders bevorzugter Ausführungsformen erläutert. Die Figuren sind schematisiert, sie zeigen teilweise nur Ausschnitte der Wiedergabeeinrichtung, gegebenenfalls in verzerrten Maßstäben. Zur besseren Überschaubarkeit werden nicht unbedingt alle denkbaren Details - insbesondere die der Korrekturmöglichkeiten - dargestellt.

Es zeigt im einzelnen

- die **Figur 1** : die Lage und Größe der einzelnen Wahrnehmungszonen der erfindungsgemäßen Wiedergabeeinrichtung,
- die **Figur 2** : den Aufbau der erfindungsgemäßen Wiedergabeeinrichtung unter Angabe aller wesentlichen Parameter,
- die **Figur 3** : ein Diagramm zur Parameterabschätzung,
- die **Figur 4** : einen Anwendungsfall für die erfindungsgemäße Wiedergabeeinrichtung in der Großbildprojektion.

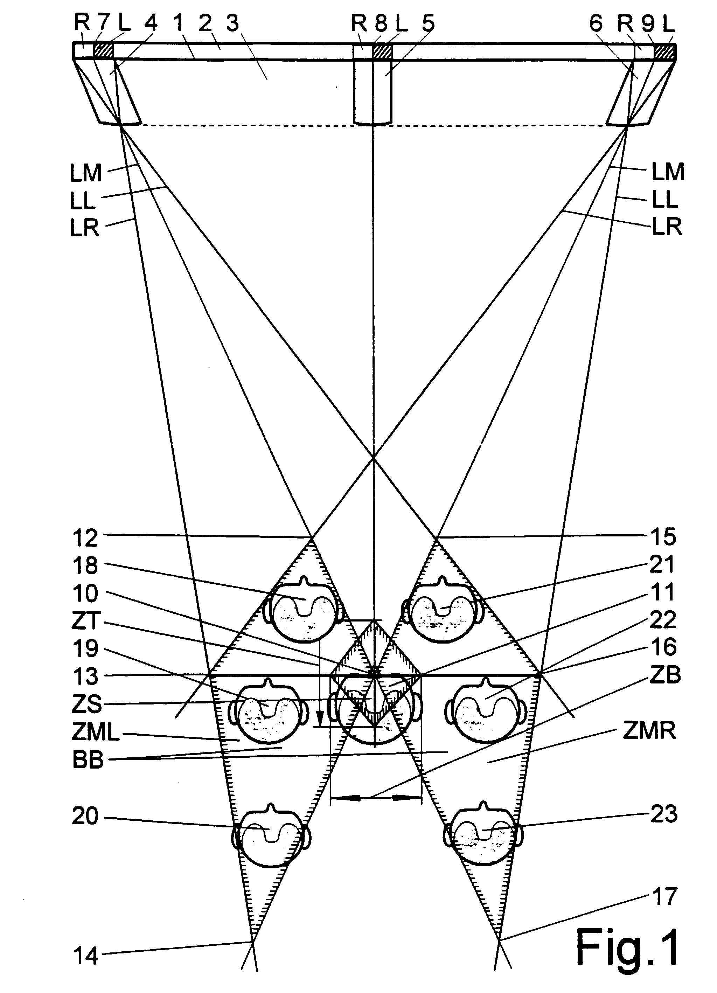

In der **Figur 1** ist schematisiert eine Mehrzonen-Wiedergabeeinrichtung 1 durch einen flachen Bildschirm 2 und einer, dieser vorgelagerten Lentikularplatte 3 dargestellt. Vor der Mehrzonen-Wiedergabeeinrichtung 1 befindet sich ein Beobachtungsbereich BB für die Wahrnehmumg der erzeugten Abbildungen. Auf dem Bildschirm 2 liegen hinter Zylinderlinsen 4,5,6 ineinander gerasterte Bildstreifenpaare 7,8,9. Jedes Bildstreifenpaar 7,8,9 besteht aus einem Bildstreifen R, der von einem rechten Kamerasignal erzeugt ist, und einem Bildstreifen L, der von einem linken Kamerasignal erzeugt ist. Beide Kamerasignale stammen von einer Stereobildaufnahme des abzubildenden Objekts. Von der Zylinderlinse 4 vor dem Bildstreifenpaar 7 sind die Verläufe eines mittleren Lichtstrahls LM, eines Lichstrahls LL am linken Rand und eines Lichtstrahls LR am rechten Rand dargestellt. Analog dazu sind für die Zylinderlinse 6 vor dem Bildstreifenpaar 9 ebenfalls ein mittlerer Lichtstrahl LM, ein linker Randstrahl LL und ein rechter Randstrahl LR eingezeichnet.

Die Schnittpunkte der, für das Abbildungsverhalten der Zylinderlinsen 4,5,6 repräsentativen Lichtstrahlen LL, LM, LR legen die Eckpunkte der einzelnen Zonen des Beobachtungsbereichs BB fest. Eine zentrale Stereozone ZS befindet sich im Bereich eines Schnittpunktes 10 der beiden Mittenstrahlen LM der Zylinderlinsen 4,6. In dieser zentralen Stereozone ZS kann zumindest ein einzelner zentraler Betrachter 11 die Abbildungen autosteroskopisch wahrnehmen, weil sein linkes Auge ausschließlich die Bildstreifen L und sein rechtes Auge ausschließlich die Bildstreifen R sieht. Die Ausbildung der zentralen Stereozone ZS ist rhombenförmig. Ihre größte Breite ZB entspricht dem doppelten Augenabstand des Betrachters 11, ihre größte Tiefe ZT ist von dessen Augenabstand und vom Verlauf der mittleren Lichtstrahlen LM abhängig. Der zentrale Betrachter 11 befindet sich solange in der zentralen Stereozone ZS, wie seinen Augen die unterschiedlichen Bildstreifen L,R richtig zugeordnet sind.

Der zentralen Stereozone ZS sind jeweils seitlich große Monozonen ZML, ZMR benachbart. Eine linke große Monozone ZML wird gebildet zwischen dem Schnittpunkt 10 und weiteren Schnittpunkten 12, 13, 14. Eine rechte große Monozone ZMR liegt zwischen dem Schnittpunkt 10 und weiteren Schnittpunkten 15,16,17. Beide Monozonen ZML, ZMR haben im dargestellten Ausführungsbeispiel den Schnittpunkt 10 gemeinsam. Deshalb sind sie hier der zentralen Stereozone ZS nicht nur seitlich direkt benachbart, sondern sie überlagern sich auch mit dieser. Ein Abstand der beiden Monozonen ZML, ZMR vom gemeinsamen Schnittpunkt 10 bis maximal auf Augenabstand ist möglich.

In den großen Monozonen ZML, ZMR wird jeweils nur ein Kamerabild zur Verfügung gestellt. Innerhalb dieser großen Monozonen ZML, ZMR können mehrere Betrachter 18...23 die erzeugten Abbildungen monoskopisch wahrnehmen. Dabei sehen die Betrachter 18,19,20 mit beiden Augen ausschließlich die Bilder der linken Kameraeinstellung, wohingegen die Betrachter 21,22,23 mit beiden Augen nur die Bilder der rechten Kameraeinstellung sehen. Da beide Einstellungen im Augenabstand voneinander aufgenommen wurden, unterscheiden sich die Bildinhalte nur geringfügig voneinander. Die beiden großen Monozonen ZML,ZMR sind wiederum rhombenförming ausgebildet, jetzt aber mit gegenüber der Stereozone ZS großen Abmessungen.

Beim Übergang des zentralen Betrachters 11 in eine der beiden großen Monozonen ZML,ZMR - und umgekehrt ebenso für Betrachter 18...23 in die zentrale Stereozone ZS - treten für diese keine störenden pseudoskopischen Effekte auf.

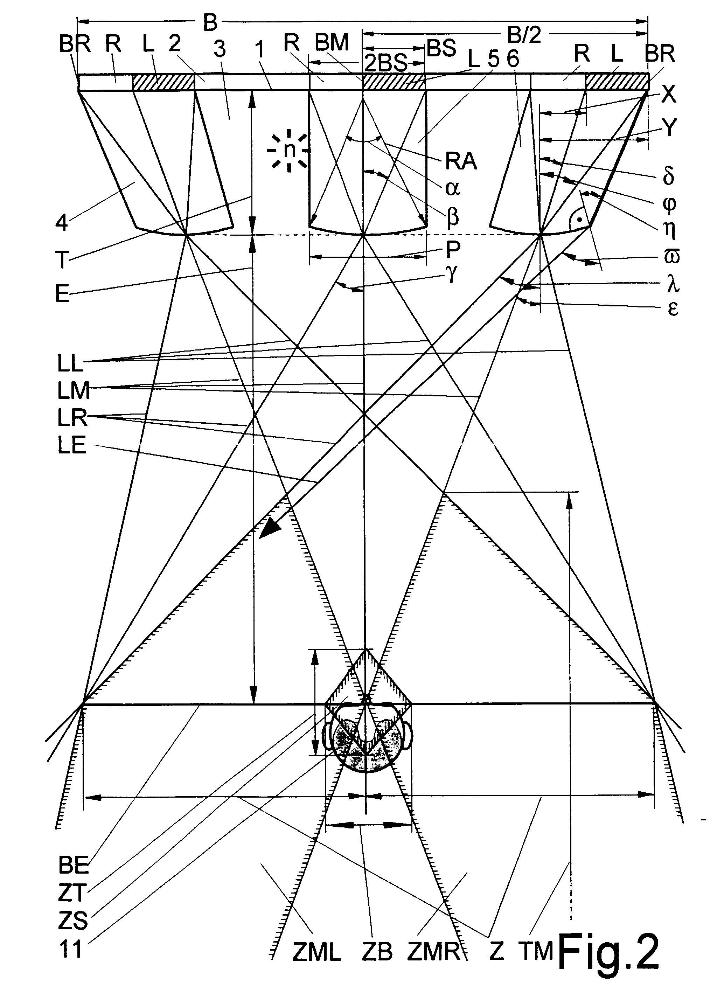

Die **Figur 2** zeigt die genaueren optischen Verhältnisse bei einer Wiedergabeeinrichtung 1. Da zur Erläuterung einer möglichen Dimensionierung mathematische Formeln erforderlich sind, sollen zunächst alle wesentlichen Parameter an Hand der Figur 2 veranschaulicht werden. Nicht erwähnte Bezugszeichen siehe Figur 1.

Dargestellt sind zwei ausgezeichnete Bereiche auf dem Bildschirm 2 der Breite B : eine Bildschirmmitte BM und in Abstand von B/2 dazu ein Bildschirmrand BR. Wegen des symmetrischen Aufbaus des Bildschirms 2 sind die Verhältnisse an beiden Bildschirmrändern BR gleich. In der Bildschirmmitte BM und am Bildschirmrand BR ist jeweils ein Streifenpaar L,R der Rasterbildstereoaufnahme mit einer Streifenbreite BS dargestellt. Vor den Streifenpaaren L,R befindet sich die Zylinderlinse 4,5,6 mit einer Pitchbreite P, die zumindest in der Bildschirmmitte BM gleich der Streifenpaarbreite 2BS ist. Die Zylinderlinse 4,5,6 hat einen Krümmungsradius RA und einen Öffnungswinkel $\alpha$. In der Bildschirmmitte BM ist die Zylinderlinse 5 mittig vor dem Bildstreifenpaar L,R angeordnet, am Bildschirmrand BR weist die Zylinderlinse 4,6 diesem gegenüber aus den bereits im allgemeinen Beschreibungsteil genannten optischen Korrekturgründen einen Versatz, die Pitchkorrektur X auf. Von der Bildschirmmitte BM zum Bildschirmrand BR hin vergrößert sich die Pitchkorrektur X stetig. Der Bildschirmrand BR liegt bei konstanter Streifenbreite BS um das Maß Y = X + BS außerhalb der Mittellinie der äußersten Zylinderlinse 4,6. Die die Zylinderlinsen 4,5,6 tragende Lentikularplatte 3 weist einen Brechungsindex n und eine Dicke T auf. Auch die Dicke T der Lentikularplatte 3 kann aus Korrekturgründen stetig verändert werden (nicht dargestellt). Mit E ist die Entfernung der Lentikularplatte 3 zu einer zentralen Betrachtungsebene BE bezeichnet.

Ein vom rechten Rand des Bildstreifens L hinter der Zylinderlinse 5 kommender Lichtstrahl LR fällt unter einem Einfallswinkel $\beta$ in die Mitte der Zylinderlinse 5 ein und tritt aus ihr unter einem Ausfallswinkel $\gamma$ wieder aus. Zwischen einem durch die Mitte der Zylinderlinse 5 ungebrochen durchtretenden Lichtstrahl LM und dem Lichtstrahl LR in der Betrachtungsebene BE liegt die linke Monozone ZML mit einer Zonenbreite Z. Entsprechend bildet der vom linken Rand des Bildstreifens R hinter der Zylinderlinse 5 kommende Lichtstrahl LL mit dem Mittenstrahl LM die rechte Monozone ZMR mit ebenfalls der Zonenbreite Z. Beide Monozonen ZML, ZMR sind senkrecht zur Betrachtungsebene BE rhombenförmig ausgebildet und haben eine größte Tiefe TM.

Am Bildschirmrand BR fällt aufgrund der Pitchkorrektur X der Mittenstrahl LM der Zylinderlinse 4,6 unter einem Einfallswinkel $\delta$ ein und tritt aus ihr unter einem Ausfallswinkel $\epsilon$ wieder aus. Der vom rechten Rand des Bildstreifens L hinter der Zylinderlinse 4,6 kommende Lichtstrahl LR tritt unter einem Einfallswinkel $\varphi$ in die Mitte der Zylinderlinse 4,6 ein und unter einem Ausfallswinkel $\lambda$ wieder aus. Am äußersten Rand der Zylinderlinse 4,6 tritt ein äußerster Randstrahl LE höchstens unter dem Grenzwinkel der Totalreflexion $\eta$ in diese ein und unter einem Ausfallswinkel $\overline{\omega}$ wieder aus.

Mit den erläuterten Parametern wird im folgenden eine kurze Übersicht über den Ablauf möglicher Parameterberechnungen gegeben. Alle angegebenen Formeln leiten sich aud den geometrischen Beziehungen an der Wiedergabeeinrichtung 1 unter Einbeziehung bekannter optischer Gesetze und trigonometrischer Umformungen her.

Für die Bildschirmmitte BM gilt :

$$(1) \qquad \frac{T}{P} = \frac{1}{2} \sqrt{\left(n^2 \left(\left(\frac{E}{Z}\right)^2 + 1\right) - 1\right)}$$

Durch Umstellung läßt sich aus (1) Z errechnen :

$$(2) \qquad Z = \frac{E}{\sqrt{\frac{1}{n^2} \left(\left(\frac{T}{P/2}\right)^2 + 1\right) - 1}}$$

Für die Tiefe TM der Monozonen ZML, ZMR gilt :

$$(3) \qquad TM = \frac{E \cdot B \cdot 2Z}{B^2 - Z^2}$$

Für den Bildschirmrand BR gilt :

$$(4) \qquad \frac{T}{Y} = \frac{1}{2} \sqrt{n^2 \left(\left(\frac{E}{B/2 + Z}\right)^2 + 1\right) - 1}$$

Der Grenzwinkel der Totalreflexion ist eine Materialkonstante. In der Bildschirmmitte BM bzw. am Bildschirmrand BR gilt also die Bedingung :

$$(5) \qquad \frac{1}{n} >= \sin \beta \quad bzw. \quad \frac{1}{n} >= \sin \varphi$$

Für ein angenommenes n = 1,5 liegt der Grenzwinkel der Totalreflexion bei 41,8°.

Damit berechnet sich das Verhältnis T/P bzw. T/Y in einer Näherung als Grenzwert unter der Annahme des Grenzwinkels der Totalreflexion :

$$(6) \qquad \frac{T}{P} = \frac{T}{Y} = \frac{1}{2}\sqrt{n^2 - 1}$$

Die Pitchkorrektur X am Bildschirmrand BR errechnet sich zu:

$$(7) \qquad X = \frac{T}{\sqrt{n^2\left(\left(\frac{E}{B/2}\right)^2 + 1\right) - 1}}$$

Für gewählte Verhältnisse von P und T sowie E und B kann eine maximale Breite Zmax der Monozonen ZML, ZMR berechnet werden. Diese Berechnung erfolgt für den Mittenstrahl LM der äußersten Zylinderlinse 4,6.

$$(8) \qquad Zmax = \frac{B}{2} - \frac{E}{\sqrt{\left(\frac{T}{n(X - P/2)}\right)^2 + \frac{1}{n^2} - 1}}$$

Aus (8) kann nach entsprechender Umstellung das maximale Verhältnis von P/T berechnet werden.

Die vorstehenden Berechnungen stellen eine Näherung dar, bei der berücksichtigt ist, daß auch der seitlich in die Zylinderlinsen 4,5,6 einblickende Betrachter keine Qualitätsminderung der Wahrnehmung durch Totalreflexion der mittleren Lichtstrahlen LM erfährt. Sollen darüberhinaus alle übrigen inneren Reflexe durch Totalreflexion von Lichtstrahlen LL,LR,LE abweichend vom Mittenstrahl LM ausgeschaltet werden, sind auch am Bildschirmrand BR die äußersten Randstrahlen LE jeder Zylinderlinse 4,6 auf Totalreflexion zu untersuchen. Unterliegt der äußerste Lichtstrahl LE der äußersten Zylinderlinse 4,6 gerade nicht der Totalreflexion, gilt dies für alle anderen, weiter innen liegenden Lichtstrahlen auch.

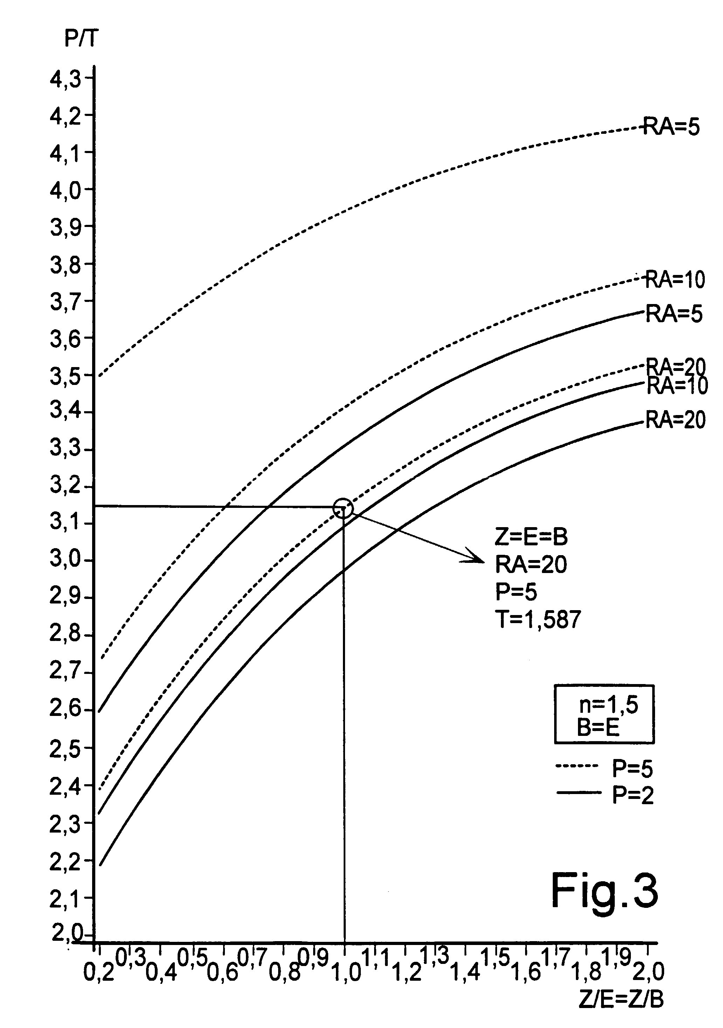

Die einzelnen Parameter als Grenzwerte unter der Bedingung der Ausschließung jeglicher Totalreflexion können aus einer impliziten Formel bevorzugt iterativ rechnerunterstützt errechnet werden. Dabei geht die Formel von den geometrischen Verhältnissen an der äußersten Zylinderlinse 4,6 und dem äußersten Lichtstrahl LE aus. Insbesondere berücksichtigt sie erstmals den Radius RA der Zylinderlinse 4,6. Auch der Radius RA kann aus optischen Korrekturgründen variiert werden (hier nicht berücksichtigt). Eine Veranschaulichung des Zusammenhangs ausgewählter Parameterkombinationen in Abhängigkeit von weiteren Parametern bietet das Diagramm in **Figur 3**. Es dient auch als Dimensionierungshilfe bei der beispielhaft gewählten Parameterkonstellation. Andere Beziehungen sind möglich. In Figur 3 wird eine Beziehung zwischen den Parametern E bzw. B und Z einerseits sowie P und T hergestellt. Die Dimension aller Parameter ist gleich, im allgemeinen mm. Der Brechungsindex n wird mit 1,5 für Glas festgelegt. Aus praktischen Erwägungen ist E = B gesetzt. Auf der Ordinatenachse wird das Verhältnis P/T in einem bevorzugten Bereich angegeben. Für P = 2 und P = 5 wird dann für je ein Wertetripel von RA (5,10,20) Z errechnet, mit E bzw. B in das Verhältnis gesetzt und auf der Abszissenachse abgetragen. Konkret ergibt sich beispielsweise für P= 5 und T = 1,59 (P/T = 3,15) bei RA = 20 unter den genannten Voraussetzungen mit z.B. B = E = 1000 eine Breite Z der großen Monozonen ZML, ZMR zu ebenfalls 1000 (Z/E = Z/B = 1,0). Das gewählte Zahlenbeispiel ist in Figur 3 angedeutet.

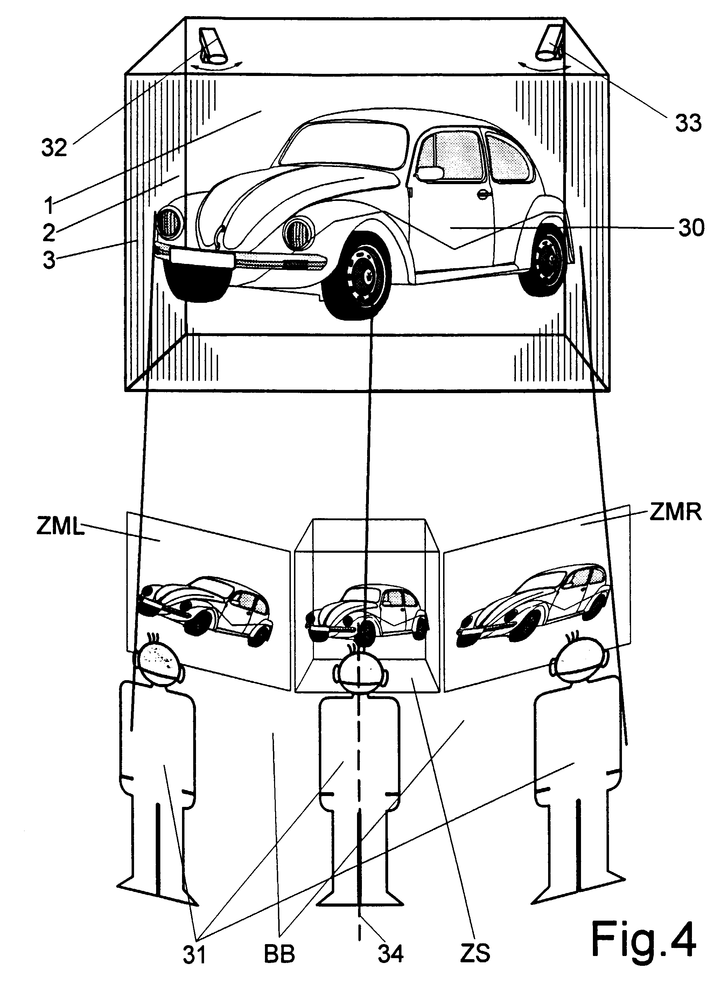

Der **Figur 4** ist ein Anwendungsfall der Wiedergabeeinrichtung 1 unter Verwendung des Head-Tracking-Verfahrens zu entnehmen. Die Wiedergabeeinrichtung 1 ist im Präsentationsbereich, beispielsweise auf einer Ausstellung eingesetzt. Ein darzustellendes Objekt 30 ist auf dem flachen Bildschirm 2 mit einer relativ großen Bilddiagonale hinter der, mit einem Luftspalt vor dem Bildschirm 2 angeordneten Lentikularplatte 3 dargestellt. Die Auflösung der Bilddarstellung ist so hoch, daß die erforderlichen Zylinderlinsen 4,5,6 mit großem Öffnungswinkel in der Figur 3 nur angedeutet sind, sichtbar sind sie nicht. Von der Wiedergabeeinrichtung 1 werden im Beobachtungsbereich BB die zwei Monozonen ZML, ZMR mit der dazwischenliegenden Stereozone ZS erzeugt.

Betritt ein Betrachter 31 den Beobachtungsbereich BB von rechts, so gelangt er in die rechte Momozone ZMR. Hier kann er das Objekt 30 zunächst für eine erste Information flächig wahrnehmen. Tritt der Betrachter 31 von der rechten Monozone ZMR in die Stereozone ZS, wird er von einem Head-Tracking -System eingefangen. Dazu wird seine Augenposition von zwei Kamera-Detekoren 32,33 registriert und das darzustellende Objekt 30 über eine Verschiebung der Lentikularplatte 3 gegenüber dem Bildschirm 2 auf ihn eingestellt. Die Einstellung erfolgt durch Überdeckung der Bildschirmmitte BM mit der Kopfmittenlinie 34 des Betrachters 31. Der Betrachter 31 sieht das Objekt 30 jetzt autostereoskopisch. Innerhalb eines wählbaren Detektionsbereiches suchen die Detektoren nach dem beliebigen Betrachter 31 und stellen die Stereozone ZS für diesen ein. Er muß daher keine starre Kopfposition einmehmen. Verläßt er den Fangbereich (Größe z.B. 1m x 1m), gelangt er in die linke Monozone ZML. Hier kann der Betrachter 31 das Objekt 30 noch einmal zweidimensional auf sich nachwirken lassen. Erst wenn der zuerst eingefangene Betrachter 31 den Fangbereich verläßt, sucht sich das Head-Tracking-System einen neuen Betrachter.

**Patentansprüche**

1. Wiedergabeeinrichtung zum Erzeugen stereoskopischer Wirkungen in mimdestens einer örtlich begrenzten Zone ihres vor ihr befindlichen Beobachtungsbereichs, mit :

   - einem flachen Bildschirm, auf dem sich Stereobilder als vertikal zerlegte Bildstreifen paarweise ineinander gerastert darstellen lassen, und
   - einer Lentikularplatte, die dem flachen Bildschirm vorgelagert ist und senkrecht verlaufende, jeweils einem auf dem flachen Bildschirm darzustellenden Bildstreifenpaar zugeordnete Zylinderlinsen trägt,

   **dadurch gekennzeichnet, daß**
   die Lentikularplatte (3) mit ihren Zylinderlinsen (4,5,6) bezüglich ihrer Parameter Pitchbreite (P) der Zylinderlinsen (4,5,6) sowie Dicke (T) und Brechungsindex (n) der Lentikularplatte (3) einen Aufbau aufweist, aufgrund dessen zwei zumindest direkt benachbarte Monozonen (ZML, ZMR) im Beobachtungsbereich (BB) mit jeweils großer Zonenbreite (Z) und eine zentrale Stereozone (ZS) im Übergangsbereich zwischen bzw. innerhalb der Monozonen (ZML, ZMR) entstehen, indem diese Parameter (P,T,n), bezogen auf eine vorzugebende Entfernung (E) der Lentikularplatte (3) zu einer zentralen Betrachtungsebene (BE), entsprechend den sich aus der strahlengeometrischen Beziehung

$$Z = \frac{E}{\sqrt{\frac{1}{n^2} \left( \left( \frac{T}{P/2} \right)^2 + 1 \right) - 1}}$$

   ergebenden Verhältnissen dimensioniert sind.

2. Wiedergabeeinrichtung nach Anspruch 1,
   **dadurch gekennzeichnet, daß**
   die Zylinderlinsen (4,5,6) aufgrund der Wahl eines oberen Grenzwerts für deren Pitchbreite (P) in bezug auf eine geringe Dicke (T) der Lentikularplatte (3) einen großen Öffnungswinkel ($\alpha$) aufweisen, so daß der gesamte Beobachtungsbereich (BB) in zwei gleich große Bereiche, die Monozonen (ZML, ZMR), aufgeteilt ist.

3. Wiedergabeeinrichtung nach Anspruch 2,
   **dadurch gekennzeichnet, daß**
   die Parameter Pitchbreite (P) und Dicke (T) in Abhängigkeit von weiteren Parametern der Wiedergabeeinrichtung (1) - Bildschirmbreite (B), Betrachterentfernung (E), Brechungsindex (n) und Krümmungsradius (RA) der Zylinderlinsen (4,5,6) - hinsichtlich ihrer Grenzwerte unter Vermeidung innerer Reflexe durch Totalreflexion an den Krümmungsflächen der Zylinderlinsen (4,5,6) dimensioniert sind.

4. Wiedergabeeinrichtung nach Anspruch 3,
   **dadurch gekennzeichnet, daß**
   alle Zylinderlinsen (4,5,6) nach Maßgabe der bezüglich der Totalreflexion dimensionierten äußersten Zylinderlinsen (4,6) am linken bzw. rechten Rand der Lentikularplatte (3) ausgelegt sind.

5. Wiedergabeeinrichtung nach Anspruch 4
   **dadurch gekennzeichnet, daß**
   andere Parameter - Zonenbreite (Z) und Tiefe (TM) der großen Monozonen (ZML, ZMR) ; Bildschirmbreite (B) - in Abhängigkeit von den jeweils verbleibenden Parametern durch die Wahl ihrer Grenzwerte festlegbar sind.

6. Wiedergabeeinrichtung nach Anspruch 4
   **dadurch gekennzeichnet, daß**
   die Zylinderlinsen (4,5,6) an ihrer Oberfläche asphärisch gekrümmt sind.

7. Wiedergabeeinrichtung nach Anspruch 6,
**dadurch gekennzeichnet,** daß
jede einzelne Zylinderlinse (4,5,6) an ihren seitlichen Begrenzungen Reflexionsflächen aufweist, an denen einfallende Lichtstrahlen durch die Linsenmitte reflektiert werden.

8. Wiedergabeeinrichtung nach einem der Ansprüche 1 bis 7,
**dadurch gekennzeichnet,** daß
symmetrisch von der Mitte der Lentikularplatte (3) zu ihren beiden Seitenrändern hin ein zunehmender Versatz (X) jeder einzelnen Zylinderlinse (4,5,6) gegenüber dem jeweilig zugeordneten Bildstreifenpaar (L,R) durch eine Abnahme der Pitchbreite (P) der Zylinderlinsen (4,5,6) oder eine Zunahme der Breite (BS) der Bildstreifenpaare bei jeweils konstantem anderen Parameter vorgesehen ist.

9. Wiedergabeeinrichtung nach Anspruch 8,
**dadurch gekennzeichnet,** daß
symmetrisch von der Mitte der Lentikularplatte (3) zu ihren beiden Seintenrändern hin eine Zunahme der Dicke (T) der Lentikularplatte (3) vorgesehen ist.

10. Wiedergabeeinrichtung nach Anspruch 9,
**dadurch gekennzeichnet,** daß
symmetrisch von der Mitte der Lentikularplatte (3) zu ihren beiden Seitenrändern hin eine Zunahme des Krümmungsradius (RA) der Zylinderlinsen (4,5,6) vorgesehen ist.

11. Wiedergabeeinrichtung nach einem der Ansprüche 1 bis 10,
**dadurch gekennzeichnet,** daß
den breiten Zylinderlinsen (4,5,6) jeweils ein Bildstreifenpaar zugeordnet ist, bei dem jeder einzelne Streifen (L, R) mit einer einzigen Spalte aus relativ breiten Pixeln besteht.

12. Wiedergabeeinrichtung nach einem der Ansprüche 1 bis 11,
**dadurch gekennzeichnet,** daß
eine Einrichtung zur Nachführung der erzeugten Bildinhalte vorgesehen ist, die bei autostereoskopischer Bildbetrachtung durch einen Betrachter (11, 31) dessen Augen- und /oder Kopfposition laufend detektiert (32, 33) und den erzeugten Bildinhalt auf die Augenposition innerhalb der Stereozone (ZS) einstellt.

**Claims**

1. Reproduction device for the production of stereoscopic effects in at least one locally limited zone of its observation zone, which is located in front of it, with:

   • a flat display screen, on which stereo images can be shown as vertically divided image strips which are rastered into eachother pairwise, and
   • a lenticular plate, which is mounted in front of the flat display screen and bears vertically running cylindrical lenses, which are associated each with a respective image strip pair to be displayed on the flat display screen.

   **characterized in that** the lenticular plate (3) with its cylindrical lenses (4, 5, 6) has a structure with respect to its parameters of pitch width (P) of the cylindrical lenses and also the thickness (T) and refractive index (n) of the lenticular plate (3), due to which two at least directly adjacent mono-zones (ZML, ZMR) arise in the observation zone (BB) with a respectively large zone width (Z), and a central stereo zone (ZS) arises in the transition region between or within the mono-zones (ZML, ZMR); in that these parameters (P, T, n), with respect to the preassigned distance (E) of the lenticular plate (3) to a central viewing plane (BE), are dimensioned according to the relationship given by the equation of beam geometry:

$$Z = \frac{E}{\sqrt{\dfrac{1}{n^2}\left(\left(\dfrac{T}{P/2}\right)^2 + 1\right) - 1}}$$

2. Reproduction device according to Claim 1, **characterized in that** the cylindrical lenses (4, 5, 6), due to the choice of an upper limiting value for their pitch width (P) in relation to a small thickness (T) of the lenticular plate (3), have a large aperture angle ($\omega$), so that the whole observation region (BB) is devided into two equally large regions, mono-zones (ZML, ZMR).

3. Reproduction device according to Claim 2, **characterized in that** the parameters pitch width (P) and thickness (T) are dimensioned in dependence on further parameters of the reproduction device (1) - display screen width (B), viewer distance (E), refractive index (n) and radius of curvature (RA) of the cylindrical lenses (4, 5, 6) - as regards their limiting values, while preventing internal reflections due to total reflection at the curved surfaces of the cylindrical lenses (4, 5, 6).

4. Reproduction device according to Claim 3, **characterized in that** all the cylindrical lenses (4, 5, 6) are designed according to the outermost cylindrical lenses (4, 6), at the left-hand or right-hand edge of the lenticular plate, dimensioned with respect to total reflection.

5. Reproduction device according to Claim 4, **characterized in that** other parameters - zone width (Z) and depth (TM) of the large mono-zones (ZML, ZMR); display screen width (B) - can be established in dependence on the respective remaining parameters by the choice of their limiting values.

6. Reproduction device according to Claim 4, **characterized in that** the cylindrical lenses (4, 5, 6) are aspherically curved at their surface.

7. Reproduction device according to Claim 6, **characterized in that** each individual cylindrical lens (4, 5, 6) has, on ist lateral borders, reflection surfaces at which the incident light beams are reflected through the middle of the lens.

8. Reproduction device according to one of Claims 1-7, **characterized in that** an increasing displacement (X) of each individual cylindrical lens (4, 5, 6) with respect to the respective associated image strip pair (L, R) is provided, symmetrically from the middle of the lenticular plate (3) to its two side edges, by a reduction of the pitch width (P) of the cylindrical lenses (4, 5, 6) or an increase of the width (BS) of the image strip pairs, with respectivly constant other parameter.

9. Reproduction device according to Claim 8, **characterized in that** an increase of the thickness (T) of the lenticular plate (3) is provided symmetrically from the middle of the lenticular plate (3) to its two side edges.

10. Reproduction device according to Claim 9, **characterized in that** an increase of the radius of curvature (RA) of the cylindrical lenses (4, 5, 6) is provided symmetrically from the middle of the lenticular plate (3) to its two side edges.

11. Reproduction device according to one of Claims 1-10, **characterized in that** a respective image strip pair is associated with the wide cylinder lenses (4, 5, 6), each individual strip (L, R) being produced with a single column of relativly wide pixels.

12. Reproduction device according to one of Claims 1-10, **characterized in that** a device is provided for tracking the produced image content and continously detects (32, 33) the eye- and/or head-position of a viewer (11, 31) during an autostereoscopic viewing of an image, and adjusts the image content produced to the eye position within the stereo zone (ZS).

**Revendications**

1. Installation de reproduction pour générer des effets stéréoscopiques dans au moins une zone limitée localement de sa plage d'observation amont, comprenant :

   - un écran-image plat sur lequel on peut représenter des images stéréoscopiques sous la forme de bandes d'image à compositions verticales, tramées les unes dans les autres par paire et,
   - une plaque lenticulaire en amont de l'écran-image plat, avec des lentilles cylindriques disposées perpendiculairement, associées chaque fois à une paire de bandes d'image à représenter sur l'écran-image plat,

   caractérisée en ce que

   - la plaque lenticulaire (3) et ses lentilles cylindriques (4, 5, 6) présentent, pour ses paramètres, un pas (P) des lentilles cylindriques (4, 5, 6) et une épaisseur (T), ainsi qu'un indice de réfraction (n) de la plaque lenticulaire (3), avec une construction telle que, du fait de ces deux monozones (ZML, ZMR) au moins directement voisines dans la plage d'observation (BB), avec chaque fois une largeur de zone plus grande (Z) et une zone stéréoscopique centrale (ZS), se forment dans la plage de transmission entre ou à l'intérieur des monozones (ZML, ZMR), les paramètres (P, T, n) rapportés à un éloignement prédéterminé (E) de la plaque lenticulaire (3) par rapport à un plan d'observation central (BE) correspondent à la relation de la géométrie des faisceaux :

$$Z = \frac{E}{\sqrt{\frac{1}{n^2}\left(\left(\frac{T}{P/2}\right)^2 + 1\right) - 1}}$$

2. Installation de reproduction selon la revendication 1,
   caractérisée en ce que
   les lentilles cylindriques (4, 5, 6), du fait du choix d'une valeur limite supérieure pour le pas (P) par rapport à une épaisseur faible (T) de la plaque lenticulaire (3), ont un angle d'ouverture ($\alpha$) important, de sorte que l'ensemble de la plaque d'observation (BB) est subdivisé en deux plages de même dimension, et les monozones (ZML, ZMR).

3. Installation de reproduction selon la revendication 2,
   caractérisée en ce que
   les paramètres de pas (P) et d'épaisseur (T) sont dimensionnés en fonction d'autres paramètres de l'installation de reproduction (1) (largeur de l'écran (B), éloignement de l'observateur (E), indice de réfraction (n) et rayon de courbure (RA) des lentilles cylindriques (4, 5, 6)) par rapport à leur valeur limite, en évitant des réflexions internes par réflexion totale au niveau des surfaces de courbure des lentilles cylindriques (4, 5, 6).

4. Installation de reproduction selon la revendication 3,
   caractérisée en ce que
   toutes les lentilles cylindriques (4, 5, 6) sont conçues, suivant les lentilles cylindriques (4, 6) les plus à l'extérieur, dimensionnées pour la réflexion totale, au bord gauche et au bord droit de la plaque lenticulaire (3).

5. Installation de reproduction selon la revendication 4,
   caractérisée en ce que
   d'autres paramètres (largeur de zone (Z) et profondeur (TM)) des grandes monozones (ZML, ZMR) ; largeur de l'écran-image (B)) sont fixés, en fonction des paramètres restants, par le choix de leur valeur limite.

6. Installation de reproduction selon la revendication 4,
   caractérisée en ce que
   les lentilles cylindriques (4, 5, 6) ont une surface à courbure asphérique.

7. Installation de reproduction selon la revendication 6,
   caractérisée en ce que
   chaque lentille cylindrique séparée (4, 5, 6) présente, au niveau de ses limites latérales, les surfaces de réflexion qui réfléchissent les rayons de lumière incidente en les faisant passer par le milieu de la lentille.

8. Installation de reproduction selon l'une des revendications 1 à 7,
caractérisée en ce que
symétriquement par rapport au milieu de la plaque lenticulaire (3), vers les deux bords latéraux, il est prévu un décalage croissant (X) de chaque lentille cylindrique séparée (4, 5, 6) par rapport à la paire de bandes d'image (L, R) respectivement associée, par une diminution du pas (P) des lentilles cylindriques (4, 5, 6) ou une augmentation de la largeur (BS) de la paire des bandes d'image, avec chaque fois un autre paramètre constant.

9. Installation de reproduction selon la revendication 8,
caractérisée en ce que
symétriquement par rapport au milieu de la plaque lenticulaire (3), vers les deux bords latéraux, il est prévu une augmentation de l'épaisseur (T) de la plaque lenticulaire (3).

10. Installation de reproduction selon la revendication 9,
caractérisée en ce que
symétriquement par rapport au milieu de la plaque lenticulaire (3) vers les deux bords latéraux, il est prévu une augmentation du rayon de courbure (RA) des lentilles cylindriques (4, 5, 6).

11. Installation de reproduction selon l'une des revendications 1 à 10,
caractérisée en ce qu'
aux lentilles cylindriques larges (4, 5, 6), il est associé chaque fois une paire de bandes d'image dont chaque bande séparée (L, R) correspond à une seule colonne de pixels relativement large.

12. Installation de reproduction selon l'une des revendications 1 à 11,
caractérisée par
une installation pour asservir le contenu de l'image générée, qui, pour une observation autostéréoscopique de l'image par un observateur (11, 31) dont les yeux et/ou la position de la tête sont détectés en permanence (32, 33), règle le contenu de l'image générée en fonction de la position des yeux dans la zone stéréoscopique (ZS).

Fig.1

Fig.2

Fig.3

Fig.4